# FASCICULE DE BREVET EUROPEEN

(11) **EP 1 634 789 B1**
(45) Date de publication et mention de la délivrance du brevet: **01.08.2007**
(21) Numéro de dépôt: 05018352.4
(22) Date de dépôt: 24.08.2005
(51) Int. Cl.: B60T 13/567

(54) **Servomoteur comportant un système ameliore de maintien au repos dudit servomoteur**
Unterdruckbremskraftverstärker mit ein verbesseres system um die Leerlauf-Postion zu halten
Vacuum Booster with a better system to keep the booster idle state

(30) Priorité: 08.09.2004 FR 0409543
(43) Date de publication de la demande: 15.03.2006
(73) Titulaire: ROBERT BOSCH GMBH, 70442 Stuttgart (DE)
(72) Inventeur: Verbo, Ulysse, 08190 Sant Cugat (ES); Michon, Jean-Pierre, 77178 Saint Pathus (FR); Cobianchi, Flavio, 10133 Turin (IT)
(74) Mandataire: Hurwic, Aleksander Wiktor

(56) Documents cités:
- DE-A1- 4 030 682
- DE-A1- 10 323 655
- FR-A- 2 834 254

## Description

L'invention concerne un servomoteur d'assistance au freinage et plus particulièrement un système de maintien au repos du servomoteur. Un tel servomoteur est décrit dans le document FR 2834254.

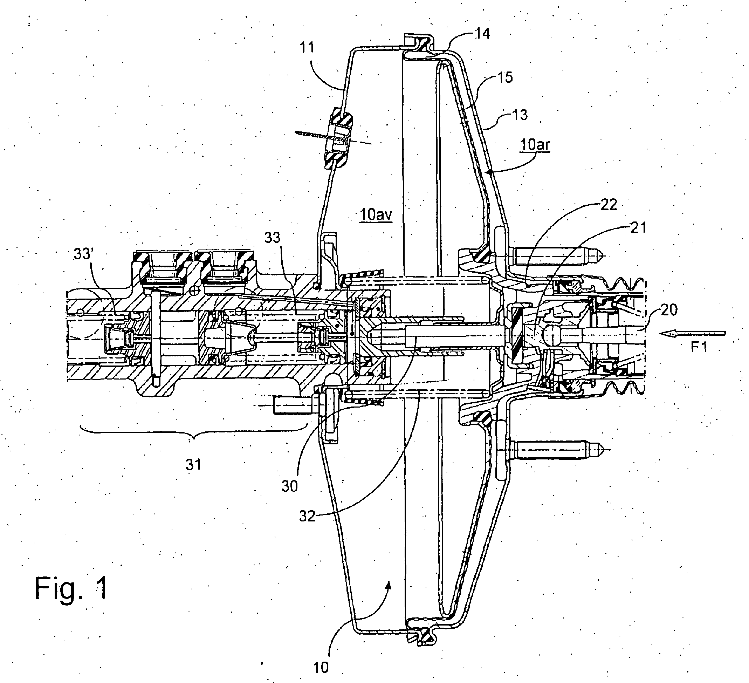

Un servomoteur d'assistance au freinage tel que celui représenté en figure 1 comporte essentiellement une enceinte 10 fermée par une paroi avant 11, une paroi latérale 12 et une paroi arrière 13. Cette enceinte comprend deux chambres (la chambre avant 10av et la chambre arrière 10ar) séparées par une membrane mobile 14.

Une tige de commande 20 peut se déplacer vers l'avant du véhicule (selon la flèche F1 sur la figure 1) lorsque le conducteur du véhicule actionne la pédale de frein. Ce déplacement de la tige de commande 20 est transmis à un plongeur 21 qui actionne des moyens d'assistance et un piston 22. Généralement, ces moyens d'assistance comprennent une vanne trois voies dont l'actionnement permet d'interrompre la communication entre la chambre avant 10av et la chambre arrière 10ar du servomoteur et de mettre cette dernière chambre à l'atmosphère ambiante. Etant donné que la chambre avant 10av est normalement sous vide, et en raison de la différence de pression entre les deux chambres, une force d'assistance est exercée sur la membrane mobile 14 qui sépare les deux chambres. Cette membrane mobile 14 est associée à une jupe 15 en matériau rigide. Sous l'effet de la force d'assistance, là membrane mobile tend à se déplacer et entraîne la jupe 15.

La jupe 15 entraîne elle-même le piston 22 qui se déplace alors vers l'avant (selon le sens de la flèche F1) en agissant sur une tige de poussée 30 qui sert à actionner le maître-cylindre 31 du circuit de freinage.

Lorsque le conducteur du véhicule relâche la pédale de frein le système retourne en position de repos (représentée sur la figure 1) sous l'action du ressort primaire 33 et du ressort secondaire 33' des cylindres primaire et secondaire du maître cylindre, ainsi que sous l'action d'un ressort 32 du servomoteur.

Le rôle du ressort 32 est surtout de maintenir dans une position de repos stable le piston 22 et la jupe 15. Cette position de repos est telle que la jupe est le plus près possible de la paroi 13. Ce maintien est nécessaire pour éviter qu'en cas de vibrations, par exemple, le piston 22 et la jupe 15 ne puisse pas se déplacer vers la gauche (sur la figure 1) et déclencher un fonctionnement inopiné du servomoteur. De plus, du fait de la basse pression dans la chambre avant, en l'absence du ressort 32, la jupe serait attirée en direction du maître cylindre.

Lors d'une commande de freinage, l'effort exercée par le conducteur sur la tige de poussée 20 doit donc vaincre l'effort de maintien du ressort 32. Cependant, l'inconvénient est que durant toute l'opération de freinage, l'effort du ressort 32 subsiste et le conducteur doit, outre l'effort nécessaire à la commande du circuit hydraulique de freinage, continuer à vaincre l'effort de ce ressort 32. L'effort du ressort croît au furet à mesure que la course de la jupe augmente.

L'invention a notamment pour objet de résoudre cet inconvénient. Elle concerne donc un système ne nécessitant pas l'utilisation d'un tel ressort 32.

L'objet d'un tel système est d'augmenter l'efficacité du système de freinage lorsqu'on atteint le point de fonctionnement de saturation du servomoteur puisque l'effort du ressort 32 n'existe pas. On améliore ainsi les performances du servomoteur.

L'invention concerne donc un servomoteur d'assistance au freinage d'un véhicule comprenant notamment une jupe et une membrane séparant la chambre avant de la chambre arrière à l'intérieur de l'enceinte du servomoteur entre une paroi avant et une paroi arrière de l'enceinte. Ladite jupe est solidaire d'un piston qui est destiné à communiquer les efforts de freinage au piston du maître cylindre du circuit de freinage du véhicule. En l'absence de commande de freinage, le piston est repoussé en position arrière, repoussant la jupe à proximité de la paroi arrière du servomoteur. Le servomoteur comporte un dispositif magnétique permettant de coupler magnétiquement, d'une part, la jupe ou un élément en matériau de bonne perméabilité magnétique solidaire de la jupe à, d'autre part, ladite paroi arrière ou un élément en matériau de bonne perméabilité magnétique solidaire de ladite paroi arrière.

Selon une forme de réalisation de l'invention, ledit dispositif magnétique est solidarisé directement ou indirectement à la paroi arrière ou à la jupe et peut se coupler magnétiquement respectivement, d'une part, à la jupe ou à un élément en matériau de bonne perméabilité magnétique solidaire de la jupe ou, d'autre part à ladite paroi arrière ou à un élément en matériau de bonne perméabilité magnétique solidaire de ladite paroi arrière.

Avantageusement, ledit dispositif magnétique est un aimant permanent.

Selon une forme de réalisation de l'invention, l'aimant est solidarisé à la paroi arrière et, en vis-à-vis de l'aimant, la jupe ne comporte pas de membrane.

Selon une autre forme de réalisation, l'aimant est solidarisé à la paroi arrière et, en vis-à-vis de l'aimant, la jupe comporte une plaque de bonne perméabilité magnétique.

Ou bien, l'aimant étant solidarisé à la jupe, en vis-à-vis de l'aimant, la paroi arrière comporte une plaque de bonne perméabilité magnétique.

Selon une variante de réalisation de l'invention, l'aimant est disposé avec l'une de ses faces polaires appliquée à ladite paroi arrière ou à la jupe ou à un élément solidaire de la paroi arrière ou de la jupe, et une pièce de bonne perméabilité magnétique est disposée à proximité de l'aimant dans son champ magnétique pour servir de chemin préférentiel au flux magnétique de l'aimant.

Selon une autre variante de réalisation, l'aimant est disposé contre ladite paroi arrière, ou contre la jupe, ou contre un élément solidaire de la paroi arrière ou de la jupe avec ses faces polaires sensiblement perpendiculaires au plan de la paroi arrière ou de la jupe, et en ce qu'il comporte deux plaques de bonne perméabilité magnétique plaquée contre les dites faces polaires, la hauteur (h) de ces plaques parallèlement aux faces polaires étant supérieure à l'épaisseur (e) de l'aimant.

Les différents objets caractéristiques de l'invention apparaîtront plus clairement dans la description qui va suivre et dans les figures annexées qui représentent:
- la figure 1, un exemple de servomoteur d'assistance au freinage de véhicule automobile connu dans la technique,
- la figure 2, un exemple de réalisation selon l'invention d'un système de maintien au repos d'un servomoteur d'assistance au freinage,
- les figures 3a à 3g, différents exemples de réalisation selon l'invention d'un dispositif de maintien au repos de la jupe du servomoteur,
- les figures 4a à 4c, différents modes de réalisation selon l'invention des aimants des figures 3a à 3g.

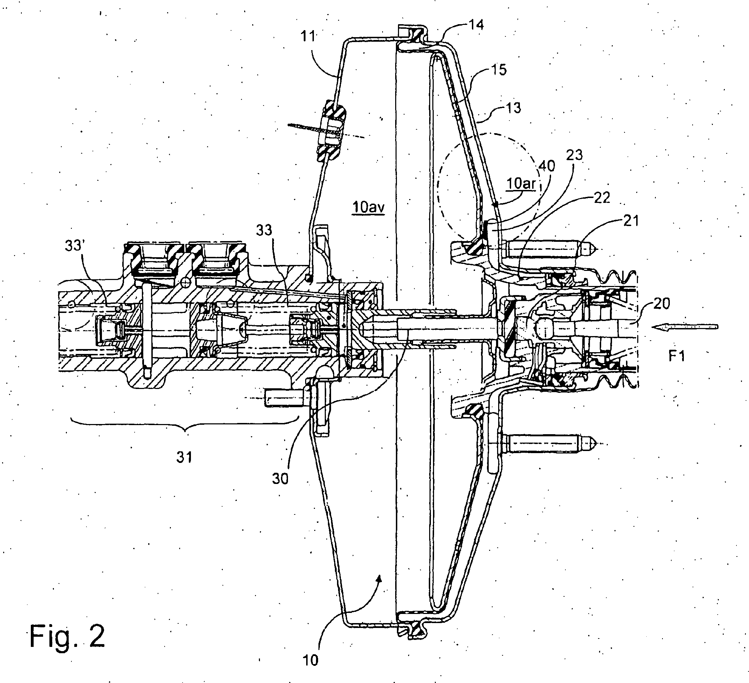

En se reportant à la figure 2, on va donc décrire un exemple de réalisation d'un système de maintien au repos d'un servomoteur d'assistance au freinage d'un véhicule automobile.

La conception du servomoteur de la figure 2 est similaire à celle du servomoteur de la figure 1. On ne décrira donc pas à nouveau le fonctionnement du servomoteur tel qu'il a été déjà décrit en relation avec la figure 1.

Selon l'invention, un dispositif magnétique permet de coupler magnétiquement la paroi arrière 13 ou un élément solidaire de cette paroi arrière à la jupe 15 ou à un élément solidaire de cette jupe. Sur la figure 2, ce dispositif magnétique prend la forme d'un aimant 40 fixé à un élément de fixation 23 du servomoteur auquel est fixée la paroi arrière 13 ou faisant partie de la paroi arrière 13. La jupe 15 est supposée être en matériau présentant une bonne perméabilité magnétique. De façon simple, la jupe est par exemple en tôle d'acier.

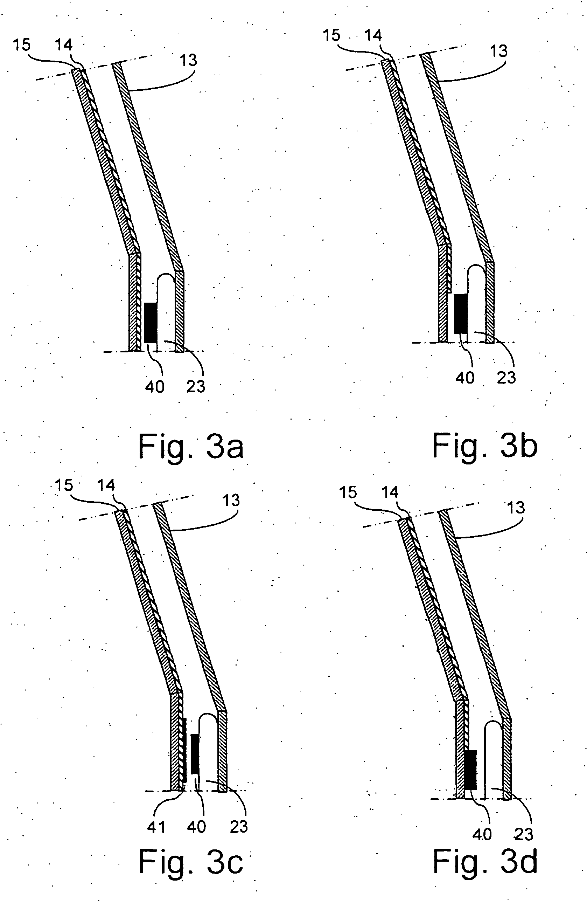

La figure 3a représente de façon plus détaillée une forme de réalisation du dispositif magnétique selon l'invention. L'aimant 40 est fixé sur l'élément de fixation 23 par exemple par collage. Il peut être également vissé sur l'élément 23 ou bridé.

L'induction de champ magnétique induite par l'aimant et sa position par rapport à la jupe 15 sont calculées de telle façon qu'en position de repos du servomoteur c'est-à-dire lorsque le conducteur n'appuie pas sur sa pédale de frein, la jupe est attirée par l'aimant et est maintenue dans une position proche de la paroi 13. Par contre, cette induction magnétique et la position de l'aimant sont telles que l'actionnement de la pédale de frein permette aisément de déplacer la jupe et de la soustraire à l'attraction magnétique de l'aimant. Lorsque la jupe n'est plus ou quasiment plus sous l'influence du champ magnétique de l'aimant, l'effort exercé par le conducteur du véhicule n'a donc plus à vaincre la force d'attraction résultant de l'induction du champ magnétique.

La figure 3b représente une variante de réalisation du dispositif de la figure 3a dans laquelle en regard de l'aimant, une partie de la membrane a été supprimée pour supprimer l'entrefer dû à la membrane de façon éventuellement à pouvoir utiliser un aimant de valeur plus faible ou bien, pour obtenir une force d'attraction magnétique plus importante.

Sur la figure 3c, on a représenté une variante de réalisation dans laquelle on a prévu une plaque 41 d'un matériau de bonne perméabilité magnétique fixée à la jupe 15. Cela est nécessaire si la jupe 15 est en matériau de faible perméabilité magnétique (plastique, duralumin, etc.). Ce sera donc cette plaque qui permettra l'attraction de la jupe par l'aimant. Cette plaque est, par exemple, en fer. Elle est fixée à la jupe 15 à l'aide de vis par exemple.

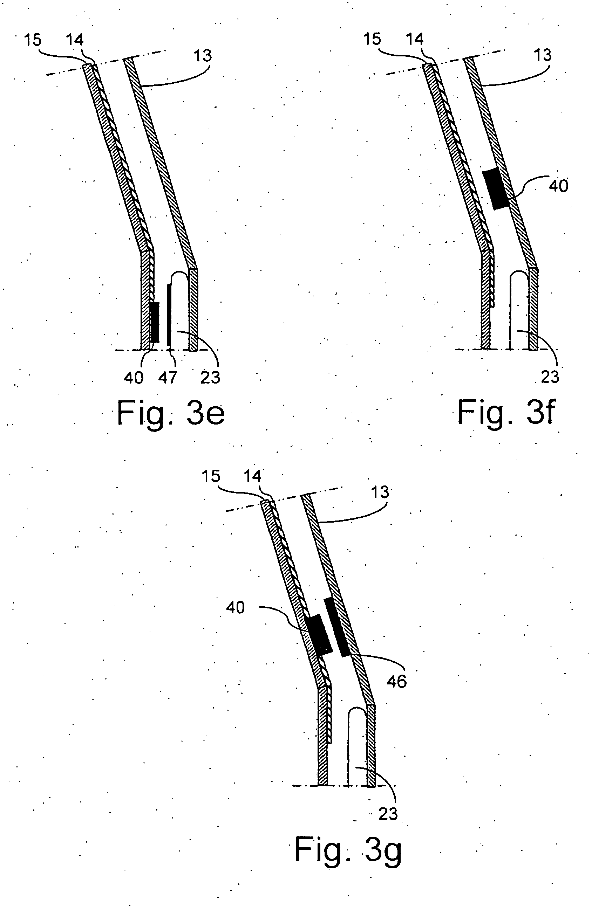

Les figures 3d et 3e représentent des variantes de réalisation dans lesquelles l'aimant 40 est fixé à la jupe 15 en regard de l'élément de fixation 23. Dans le mode réalisation de la figure 3d, l'élément de fixation 23 est en matériau de bonne perméabilité magnétique. Dans le mode réalisation de la figure 3e, on a prévu une plaque 47 en matériau de bonne perméabilité magnétique fixée sur l'élément 23 en regard de l'aimant 40.

Les figures 3f et 3g représentent des variantes de réalisation dans lesquelles le dispositif magnétique est localisé dans une zone de la paroi 13 au lieu d'être localisé sur un élément de fixation de la paroi. Sur la figure 3f, l'aimant 40 est donc fixé directement à la paroi 13. Sur la figure 3g, l'aimant 40 est fixé à la jupe 15 et selon cet exemple de variante de réalisation, on a prévu une plaque 46 en matériau de bonne perméabilité magnétique sur la paroi 13.

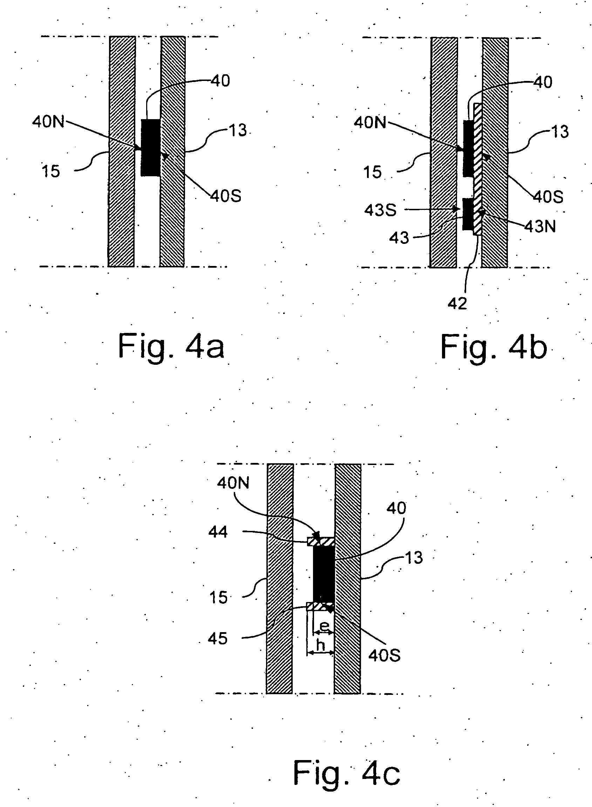

En se reportant aux figures 4a à 4c, on va décrire différents modes de réalisation de l'aimant 40.

Sur la figure 4a, l'aimant 40 est disposé sur la paroi 13 avec son pôle 40S en contact avec la paroi 13. L'aimant est collé ou fixé par vis à la paroi 13, ou bien, si la paroi 13 est en matériau de bonne perméabilité magnétique, il peut également se maintenir à la paroi 13 en raison de son aimantation.

Sur la fïgure 4b, on a prévu une pièce 43 de bonne perméabilité magnétique permettant de refermer le flux magnétique vers la jupe 15. La pièce 43 a sensiblement la même épaisseur que l'aimant 40. L'aimant 40 et la pièce 43 sont disposés sur une pièce 42 de bonne perméabilité magnétique qui est fixée sur la paroi 13 et cela notamment dans le cas ou la paroi 13 n'est pas en matériau de bonne perméabilité magnétique.

Selon une variante de réalisation, la pièce 43 peut être également un aimant dont le pôle nord 43N est accolé à la plaque 42 de façon que les deux aimants 40 et 43 soient magnétiquement en série.

Sur la figure 4c, l'aimant est fixé sur la paroi 13 par l'une de ses faces latérales. Les faces de sortie correspondant aux pôles nord et sud 40N et 40S de l'aimant sont perpendiculaires au plan de la paroi 13. En bouts des pôles 40N et 40S sont prévues des plaques 44 et 45 de bonne perméabilité magnétique dont la hauteur h est supérieure à l'épaisseur e de l'aimant. Ces plaques se maintiennent par attraction magnétique contre les pôles 40N et 40S. Elles permettent une canalisation du flux magnétique de l'aimant vers la jupe 15.

## Revendications

1. Servomoteur d'assistance au freinage d'un véhicule comprenant notamment une jupe (15) et une membrane (14) séparant la chambre avant (10av) de la chambre arrière (10ar) à l'intérieur dé l'enceinte (10) du servomoteur entre une paroi avant (11) et une paroi arrière (13) de l'enceinte, ladite jupe étant solidaire d'un piston (22) qui est destiné à communiquer les efforts de freinage au piston du maître cylindre (31) du circuit de freinage du véhicule et qui, en l'absence de commandé de freinage, est repoussé en position arrière, repoussant la jupe (15) à proximité de la paroi arrière (13) du servomoteur, **caractérisé en ce qu'**il comporte un dispositif magnétique (40) permettant de coupler magnétiquement, d'une part, la jupe (15) ou un élément en- matériau de bonne perméabilité magnétique solidaire de la jupe (15) à, d'autre part, ladite paroi arrière (13) ou un élément en matériau de bonne perméabilité magnétique solidaire de ladite paroi arrière.

2. Servomoteur d'assistance au freinage, selon la revendication 1, **caractérisé en ce que** ledit dispositif magnétique est solidarisé directement ou indirectement à la paroi arrière (13) ou à la jupe (15) et qu'il peut se coupler magnétiquement respectivement, d'une part, à la jupe (15) ou à un élément en matériau de bonne perméabilité magnétique solidaire de la jupe (15) ou, d'autre part à ladite paroi arrière (13) ou à un élément en matériau de bonne perméabilité magnétique solidaire de ladite paroi arrière.

3. Servomoteur d'assistance au freinage selon la revendication 2, **caractérisé en ce que** ledit dispositif magnétique est un aimant permanent (40).

4. Servomoteur d'assistance au freinage selon la revendication 3, **caractérisé en ce que**, l'aimant. (40) étant solidarisé à la paroi arrière (13), en vis-à-vis de l'aimant la jupe ne comporte pas de membrane.

5. Servomoteur d'assistance au freinage selon la revendication 3, **caractérisé en ce que,** l'aimant (40) étant solidarisé à la paroi arrière (13), en vis-à-vis de l'aimant (40), la jupe : comporte une plaque (41) de bonne perméabilité magnétique.

6. Servomoteur d'assistance au freinage selon la revendication 3, **caractérisé en ce que** l'aimant (40) étant solidarisé à la jupe. (15), en vis-à-vis de l'aimant (40), la paroi arrière comporte une plaque (46, 47) de bonne perméabilité magnétique.

7. Servomoteur d'assistance au freinage selon la revendication 3, **caractérisé en ce que** l'aimant (40) est disposé avec l'une de ses faces polaires (40S) appliquée à ladite paroi arrière (13) ou à la jupe (15) ou à un élément solidaire, de la paroi arrière ou de la jupe, et **en ce qu'** il comporte une pièce (43) de bonne perméabilité magnétique disposée à proximité de l'aimant dans son champ magnétique pour servir de chemin préférentiel au flux magnétique de l'aimant.

8. Servomoteur d'assistance au freinage selon la revendication 1, **caractérisé en ce que** l'aimant est disposé contre ladite paroi arrière ou contre la jupe, ou contre un élément solidaire de la paroi arrière ou de la jupe avec ses faces polaires (40N et 40S) sensiblement perpendiculaires au plan de la paroi arrière ou de la jupe, et **en ce qu'**il comporte deux plaques (44, 45) de bonne perméabilité magnétique plaquée contre les dites faces polaires (40N et 40S), la hauteur (h) de ces plaques parallèlement aux faces polaires étant supérieure à l'épaisseur (e) de l'aimant.

## Claims

1. Vehicle brake booster particularly comprising a skirt (15) and a diaphragm (14) separating the front chamber (10av) from the rear chamber (10ar) inside the enclosure (10) of the booster, between a front wall (11) and a rear wall (13) of the enclosure, the said skirt being secured to a piston (22) which is intended to communicate the braking forces to the piston of the master cylinder (31) of the vehicle braking circuit and which, in the absence of a braking command, is pushed back into the rear position, pushing back the skirt (15) into the vicinity of the rear wall (13) of the booster, **characterized in that** it comprises a magnetic device (40) for magnetically coupling, on the one hand, the skirt (15), or an element of high magnetic permeability material secured to the skirt (15), to, on the other hand, the said rear wall (13), or an element of high magnetic permeability material secured to the said rear wall.

2. Brake booster according to Claim 1, **characterized in that** the said magnetic device is secured directly or indirectly to the rear wall (13) or to the skirt (15), and **in that** it can be respectively magnetically coupled, on the one hand, to the skirt (15), or to an element of high magnetic permeability material secured to the skirt (15), or, on the other hand, to the said rear wall (13), or to an element of high magnetic permeability material secured to the said rear wall.

3. Brake booster according to Claim 2, **characterized in that** the said magnet device is a permanent magnet (40).

4. Brake booster according to Claim 3, **characterized in that**, with the magnet (40) being secured to the rear wall (13), the skirt does not have any diaphragm opposite the magnet.

5. Brake booster according to Claim 3, **characterized in that**, with the magnet (40) being secured to the rear wall (13), the skirt has a high magnetic permeability plate (41) opposite the magnet (40).

6. Brake booster according to Claim 3, **characterized in that**, with the magnet (40) being secured to the skirt (15), the rear wall has a high magnetic permeability plate (46, 47) opposite the magnet (40).

7. Brake booster according to Claim 3, **characterized in that** the magnet (40) is arranged with one of its polar faces (40S) applied to the said rear wall (13) or to the skirt (15) or to an element secured to the rear wall or the skirt, and **in that** it comprises a high magnetic permeability piece (43) arranged in the vicinity of the magnet, in the magnetic field thereof, so as to serve as a preferential path for the magnetic flux of the magnet.

8. Brake booster according to Claim 1, **characterized in that** the magnet is arranged against the said rear wall or against the skirt, or against an element secured to the rear wall or to the skirt, with its polar faces (40N and 40S) substantially perpendicular to the plane of the rear wall or of the skirt, and **in that** it comprises two high magnetic permeability plates (44, 45) placed against the said polar faces (40N and 40S), the height (h) of these plates parallel to the polar faces being greater than the thickness (e) of the magnet.

## Patentansprüche

1. Servomotor zur Unterstützung der Bremsung eines Fahrzeugs, der insbesondere eine Schürze (15) und eine Membran (14) aufweist, die im Raum (10) des Servomotors zwischen einer vorderen Wand (11) und einer hinteren Wand (13) des Raums die vordere Kammer (10av) von der hinteren Kammer (10ar) trennt, wobei die Schürze mit einem Kolben (22) fest verbunden ist, der die Bremskräfte zum Kolben des Hauptzylinders (31) des Fahrzeugbremskreises übertragen soll und bei fehlender Bremssteuerung in einer hinteren Position zurückgedrückt ist, in der die Schürze (15) in die Nähe der hinteren Wand (13) des Servomotors zurückgedrückt ist, **dadurch gekennzeichnet, dass** er eine magnetische Vorrichtung (40) aufweist, mit der einerseits die Schürze (15) oder ein mit der Schürze (15) fest verbundenes Element aus einem Material mit guter magnetischer Permeabilität und andererseits die hintere Wand (13) oder ein mit der hinteren Wand fest verbundenes Element aus einem Material mit guter magnetischer Permeabilität aneinander gekoppelt werden können.

2. Servomotor zur Bremsunterstützung nach Anspruch 1, **dadurch gekennzeichnet, dass** die magnetische Vorrichtung direkt oder indirekt mit der hinteren Wand (13) oder mit der Schürze (15) fest verbunden ist und dass sie einerseits an die Schürze (15) oder an ein mit der Schürze (15) fest verbundenes Element aus einem Material mit guter magnetischer Permeabilität bzw. andererseits an die hintere Wand (13) oder an ein mit der hinteren Wand fest verbundenes Element aus einem Material mit guter magnetischer Permeabilität magnetisch gekoppelt werden kann.

3. Servomotor zur Bremsunterstützung nach Anspruch 2, **dadurch gekennzeichnet, dass** die magnetische Vorrichtung ein Permanentmagnet (40) ist.

4. Servomotor zur Bremsunterstützung nach Anspruch 3, **dadurch gekennzeichnet, dass** die Schürze gegenüber dem Magnet keine Membran aufweist, wenn der Magnet (40) fest mit der hinteren Wand (13) verbunden ist.

5. Servomotor zur Bremsunterstützung nach Anspruch 3, **dadurch gekennzeichnet, dass** die Schürze gegenüber dem Magnet (40) eine Platte (41) mit guter magnetischer Permeabilität aufweist, wenn der Magnet (40) mit der hinteren Wand (13) fest verbunden ist.

6. Servomotor zur Bremsunterstützung nach Anspruch 3, **dadurch gekennzeichnet, dass** die hintere Wand gegenüber dem Magnet (40) eine Platte (46, 47) mit guter magnetischer Permeabilität aufweist, wenn der Magnet (40) mit der Schürze (15) fest verbunden ist.

7. Servomotor zur Bremsunterstützung nach Anspruch 3, **dadurch gekennzeichnet, dass** der Magnet (40) so angeordnet ist, dass eine seiner Polflächen (40S) an der hinteren Wand (13) oder an der Schürze (15) oder an einem mit der hinteren Wand oder mit der Schürze fest verbundenen Element anliegt, und dass er ein Teil (43) mit guter magnetischer Permeabilität aufweist, das nahe dem Magnet in dessen Magnetfeld angeordnet ist, um dem Magnetfluss des Magneten als bevorzugten Weg zu dienen.

8. Servomotor zur Bremsunterstützung nach Anspruch 1, **dadurch gekennzeichnet, dass** der Magnet an der hinteren Wand oder an der Schürze oder an ein mit der hinteren Wand oder mit der Schürze fest verbundenen Element anliegt, wobei seine Polflächen (40N und 40S) im Wesentlichen senkrecht zur Ebene der hinteren Wand oder der Schürze verlaufen, und dass er zwei Platten (44, 45) mit guter magnetischer Permeabilität aufweist, die gegen die Polflächen (40N und 40S) gedrückt sind, wobei die Höhe (h) dieser Platten parallel zu den Polflächen größer ist als die Dicke (e) des Magneten.
